(19) **Europäisches Patentamt**

**European Patent Office**

**Office européen des brevets**

(11) **EP 1 431 883 A1**

(12) **DEMANDE DE BREVET EUROPEEN**

(43) Date de publication:
**23.06.2004 Bulletin 2004/26**

(51) Int Cl.⁷: **G06F 17/27**, G06F 17/28

(21) Numéro de dépôt: **03293114.9**

(22) Date de dépôt: **11.12.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **17.12.2002 FR 0216250**

(71) Demandeur: **FRANCE TELECOM**
**75015 Paris (FR)**

(72) Inventeur: **Heinecke, Johannes**
**22300 Lannion (FR)**

(74) Mandataire: **Cabinet Martinet & Lapoux**
**43, boulevard Vauban,**
**B.P. 405 Guyancourt**
**78055 St. Quentin Yvelines Cédex (FR)**

(54) **Dispositif identifiant automatiquement la langue d'un texte**

(57)     Après pré-mémorisation de premières chaînes de caractère (PRq, SUq, INq) fréquentes dans des mots des langues et de deuxièmes chaînes de caractère atypiques (ATq) dans les langues, un dispositif identifiant automatiquement la langue d'un texte parmi plusieurs langues (L1-LQ) extrait des mots du texte et constitue toutes les chaînes de caractère (CH) contenues dans chaque mot extrait. Chaque chaîne dans un mot extrait (MT) est comparée aux premières et deuxièmes chaînes d'une langue déterminée (Lq). Lorsque le mot contient (E6) une première chaîne, un score (Sq) de la langue (Lq) augmente (E7) d'un coefficient (CCH) dépendant notamment de la position de la première chaîne dans le mot. Lorsque le mot contient (E8) une deuxième chaîne, le score diminue (E9) d'un coefficient (CAT) associé à la deuxième chaîne. Le plus grand des scores correspondant aux langues prédéterminées identifie (E14) la langue du texte.

FIG. 1

EP 1 431 883 A1

**Description**

La présente invention concerne l'identification de la langue d'un texte qui peut être court et composé de quelques mots, voire d'un seul mot.

L'invention s'applique particulièrement au traitement automatique de langue naturelle au moyen duquel la langue d'un texte écrit est reconnue avant que par exemple le texte soit traduit dans d'autres langues, ou soit synthétisé en un message vocal. Les outils de traitement automatique de langue naturelle, tels que des analyseurs syntaxiques et/ou sémantiques, utilisent des ensembles de données caractérisant une seule langue à la fois, tels qu'un lexique de forme lexicale de base constituant des entrées de dictionnaire ou de lexique, des règles morphologiques et des règles grammaticales, pour une seule langue à la fois. Même si l'outil est capable de traiter n'importe quelle langue, les données sont souvent préparées afin d'analyser une langue à la fois.

L'identification de la langue d'un texte est donc indispensable avant d'analyser linguistiquement le texte.

Selon un autre exemple, l'identification de langue est encore plus nécessaire lorsqu'un texte est écrit dans plusieurs langues par exemple de manière à traduire ce texte multilingue en une langue unique.

Le brevet US 5062143 propose une approche statistique au moyen de trigrammes, c'est-à-dire de suites de trois caractères consécutifs pour identifier la langue utilisée dans un texte. Initialement, pour chaque langue, des trigrammes qui apparaissent le plus fréquemment dans un texte de cette langue d'une taille raisonnable, par exemple de 500 caractères environ, sont détectés de manière à constituer un ensemble clé de trigrammes. Les trigrammes dont la fréquence d'occurrence est au moins égale à une fréquence prédéterminée constituent l'ensemble clé de cette langue. Par exemple pour un alphabet de 26 lettres et des trigrammes composés de caractères, y compris au moins un espace, l'ensemble clé comprend 80 trigrammes approximativement qui surviennent à une fréquence d'occurrence représentative d'une probabilité assez élevée.

Le texte dont la langue doit être identifiée est ensuite analysé pour le décomposer en trigrammes de manière à y reconnaître et à compter les trigrammes de l'ensemble clé pour une langue donnée. Les trigrammes des ensembles clé pour les autres langues sont également détectés et comptés. La langue pour laquelle le pourcentage de correspondances de trigrammes avec l'ensemble clé respectif est le plus grand et excède une valeur prédéterminée, est réputée être la langue dans laquelle le texte est écrit.

L'identification précédente d'une langue par approche statistique dépend considérablement de la longueur du texte dont la langue est à identifier. Si le texte, telle qu'une phrase, est assez long, l'approche par trigrammes selon le brevet US 5062143 confère un résultat fiable même si le texte contient des mots d'une autre langue. En revanche, l'identification d'une langue dans une phrase courte au moyen seulement de trigrammes est nettement moins précis d'autant plus que le nombre de langues susceptibles d'être identifiées est grand. Par exemple, la langue de la phrase anglaise "I want to go to Birmingham" peut être identifiée comme polonaise à cause des trigrammes "t-o-espace", et "espace-t-o" qui sont plus fréquents en polonais qu'en anglais.

Au lieu d'identifier la langue d'un document textuel entier, le procédé selon le brevet US 6292772 B1 identifie la langue de mots individuels avec précision. Le procédé d'identification selon ce brevet utilise des n-grammes de caractères d'une longueur quelconque, par exemple des unigrammes, des bigrammes, des trigrammes, et ainsi de suite, et non seulement des trigrammes. Chaque mot est décomposé en un ou plusieurs n-grammes consécutifs de manière à déterminer un premier n-gramme au début du mot, un ou plusieurs n grammes intermédiaires suivants et un dernier n-gramme qui ne se chevauchent pas et qui caractérisent le mot à analyser. Tous ces n-grammes sont comparés à des n-grammes pré-mémorisés d'une langue qui ont été définis statistiquement dans des textes d'apprentissage de la langue.

Ce procédé détermine ainsi la langue à laquelle appartient un mot isolé et est répété pour chacun des mots d'un texte pour identifier la langue de ce texte.

Lorsqu'un mot, c'est-à-dire un modèle de n-grammes, est contenu dans plusieurs langues, des poids respectifs sont attribués à ces langues pour les distinguer. Par exemple si le mot est "de", l'approche statistique sans pondération indique une probabilité identique pour le français, le néerlandais et l'espagnol, ces trois langues contenant le mot "de". La pondération permet de désigner l'une de ces trois langues alors qu'il n'est pas certain que ce mot dans le contexte d'une phrase appartienne véritablement à cette langue.

Le brevet US 6415250 est relatif à un système d'identification automatique de langue basée sur une analyse probalistique de portions prédéterminées de mots extraits dans un texte d'entrée dont la langue est identifiée. Une portion de mot est une terminaison de mot ayant un nombre de caractère prédéterminé, généralement un suffixe à la fin d'un mot, ou bien encore un préfixe. Un analyseur de corpus associe à chaque portion de mot d'un corpus prédéterminé dans une langue une fréquence normalisée représentative du nombre de fois que la portion de mot était trouvée dans le corpus et une probabilité ou vraisemblance relative déduite de la fréquence par rapport à la taille du corpus. En particulier, lorsque la portion de mot est rare dans la langue, la probabilité est voisine de zéro. Un moteur d'identification de langue dans l'analyseur somme pour chaque langue les probabilités relatives pour les portions de mot extrait reconnues dans le corpus de la langue et ne retient que la plus grande somme des probabilités relatives cumulées pour identifier la langue du texte d'entrée.

Le système d'identification de langue selon le brevet US précité est imprécis puisqu'il est limité à une seule catégorie de premières chaînes de caractères, suffixes (ou préfixes), dans un mot et donc n'analyse pas chaque mot pour y extraire toutes les chaînes de caractère possibles, quelles que soient leurs positions dans le mot et leurs longueurs. L'analyseur n'analyse qu'une chaîne de caractère par mot extrait par rapport au corpus d'une langue.

L'invention a pour objectif d'accroître la précision de l'identification d'une langue d'un texte relativement court parmi plusieurs langues d'une manière beaucoup plus fiable et efficace que par les approches connues, indépendamment de l'analyse d'un texte d'apprentissage dans chacune des langues à identifier.

L'invention n'est pas limitée à des trigrammes ou à des portions de mot ayant un emplacement déterminé dans un mot, comme un suffixe, mais utilise des n-grammes typiques et non systématiques qui peuvent se trouver n'importe où dans un mot. En effet, les trigrammes d'une langue, ni les suffixes ou préfixes seulement, ni des mots entiers ne sont pas le reflet précis de caractéristiques d'une langue qui permettent de la distinguer par rapport à d'autres langues prédéterminées.

L'invention a également pour objectif de réduire la capacité de mémoire dans un dispositif d'identification automatique de langue, comparativement à l'étendue considérable de mémoire requise pour mémoriser tous les trigrammes et plus généralement les n-grammes de chaque langue selon les approches statistiques selon la technique antérieure.

A cette fin, l'invention fournit un dispositif d'identification identifiant automatiquement la langue d'un texte numérique et ayant mémorisé des chaînes de caractère numériques pour chacune de plusieurs langues prédéterminées, comprenant un moyen pour mémoriser préalablement des chaînes de caractères se retrouvant dans des mots de langues prédéterminées, un moyen pour analyser des mots extraits du texte numérique, un moyen pour comparer des chaînes de caractères contenues dans des mots extraits à des chaînes de caractère mémorisées préalablement afin de déterminer des scores associés aux langues prédéterminées et un moyen pour comparer les scores du texte associés aux langues prédéterminées afin de déterminer le plus grand des scores qui identifie la langue du texte.

Le dispositif d'identification est caractérisé en ce que :

- le moyen pour mémoriser comprend distinctement un moyen pour mémoriser préalablement des premières chaînes de caractère qui sont fréquentes n'importe où dans des mots respectivement des langues prédéterminées et les caractérisent, et un moyen pour mémoriser préalablement des deuxièmes chaînes de caractère qui sont atypiques n'importe où dans des mots respectivement des langues prédéterminées,

- le moyen pour analyser constitue pour chaque mot extrait toutes les chaînes de caractère contenues dans le mot extrait et ayant des longueurs comprises entre un caractère et le nombre de caractère du mot extrait, et

- le moyen pour comparer compare chacune de toutes les chaînes de caractère contenues dans le mot extrait aux premières et deuxièmes chaînes de caractère d'une langue déterminée afin qu'à chaque fois qu'une première chaîne de caractère est trouvée dans le mot extrait, un score associé à la langue déterminée augmente d'un premier coefficient dépendant de la position de la première chaîne de caractère trouvée dans le mot extrait, et à chaque fois qu'une deuxième chaîne de caractère est trouvée dans le mot extrait, le score de langue diminue d'un deuxième coefficient respectif qui est associé à la deuxième chaîne de caractère trouvée et qui est d'autant plus élevée que la deuxième chaîne de caractère trouvée est improbable dans la langue déterminée.

Toutes les chaînes de caractère contenues dans le mot extrait ont une longueur comprise entre un caractère et le nombre de caractère dans le mot extrait. Typiquement, une première chaîne de caractère est constituée par l'une des chaînes de caractère suivantes dans un mot extrait : un préfixe, un pseudo préfixe, un suffixe, un pseudo suffixe, un infixe, un pseudo infixe.

Le premier coefficient d'une première chaîne de caractère dans le mot extrait peut également dépendre de la fréquence de la chaîne de caractère dans la langue déterminée et/ou de la longueur de la chaîne de caractère.

L'identification de langue est encore plus précise lorsque le dispositif comprend un moyen de comparaison pour comparer chacun des mots extraits du texte avec des mots fréquents dans la langue déterminée et initialement répertoriés dans un moyen de mémoire afin qu'à chaque fois qu'un mot fréquent est trouvé dans le texte, le score de la langue déterminée n'augmente que d'un coefficient dépendant de la fréquence du mot extrait dans la langue déterminée et/ou de la longueur du mot fréquent.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique d'un dispositif d'identification automatique de langue selon l'invention ; et
- la figure 2 est un algorithme d'identification automatique de langue selon l'invention.

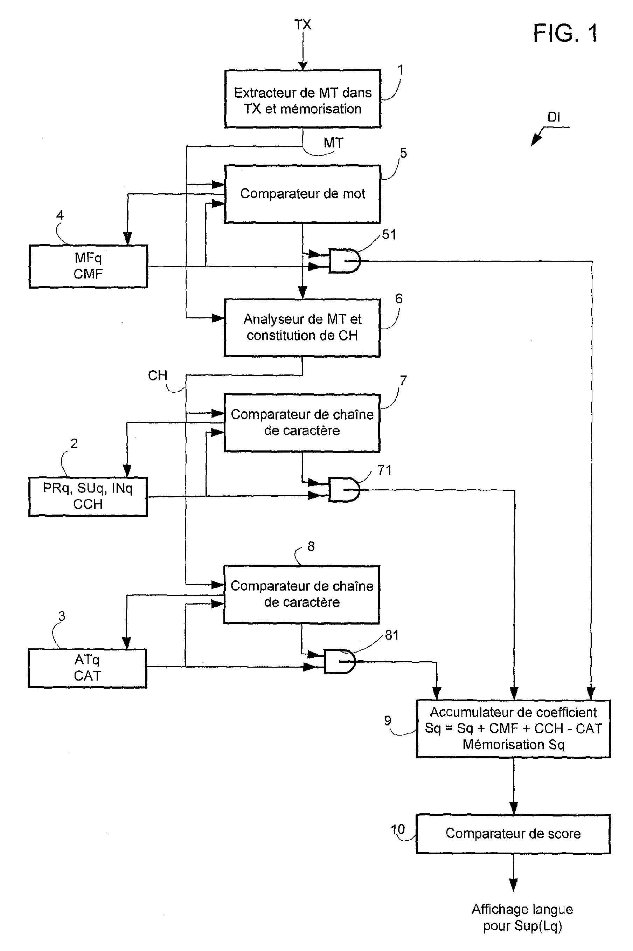

L'identification automatique de langue selon l'invention est mise en oeuvre sous la forme d'une application spécifique implémentée dans un ordinateur personnel (PC), ou dans un terminal d'usager pouvant être connecté à un réseau de téléphonie ou de radiotéléphonie et éventuellement au réseau internet, ou bien dans un serveur qui est interrogeable par des usagers depuis leurs terminaux. L'ordinateur personnel ou le terminal ou le serveur constitue un dispositif d'identification de langue DI selon l'invention dont les principaux composants logiciels relatifs à l'identification automatique de langue selon l'invention sont illustrés à la figure 1.

Un texte qui est initialement saisi dans le ou transmis au dispositif d'identification de langue DI est numérisé en un texte numérique TX formaté par exemple conformément aux spécifications du langage de documents hypertextes HTML (HyperText Markup Language). Des fichiers d'en-tête et de fin spécifiques sont ajoutés au fichier du texte TX à traiter pour que le fichier de texte soit au format HTML. Le texte TX à traiter est découpé en mots MT par un extracteur 1 qui détecte les espaces entre les mots dans le texte TX. Les mots séparés trouvés dans le texte TX sont mémorisés dans le dispositif DI.

Le dispositif DI comprend essentiellement trois types de base de données 2, 3 et 4 pour mémoriser respectivement des premières chaînes de caractère relativement fréquentes classées dans trois répertoires PRq, SUq et INq, un répertoire de chaînes de caractère atypiques voire improbables ATq, et un répertoire de mots fréquents MFq relatifs à une langue déterminée Lq. Les bases de données 2, 3 et 4 contiennent en pratique chacune 3Q, Q, Q répertoires relatifs respectivement à plusieurs langues L1 à LQ, avec $1 \leq q \leq Q$, où Q est un entier qui peut être au moins égal à 2, typiquement de l'ordre de 10 à 30 environ ou plus. En variante, les bases de données 2, 3 et 4 sont groupées dans un serveur de gestion de base de données (SGBD).

Les trois premiers répertoires PRq, SUq et INq sont relatifs à des morphèmes, syllabes et petites chaînes de caractère CH à 1 à par exemple 6 caractères qui se retrouvent fréquemment et n'importe où dans des mots de la langue Lq et qui caractérisent particulièrement la langue Lq par rapport aux autres langues L1 à L(q-1) et L(q+1) à LQ. Le répertoire PRq contient des préfixes, y compris des syllabes et des chaînes de caractère d'attaque non morphologiques, c'est-à-dire des pseudo préfixes, rencontrés fréquemment dans les mots de la langue Lq. Le répertoire SUq contient des suffixes, y compris des syllabes et des terminaisons non morphologiques, c'est-à-dire des pseudo suffixes, rencontrés fréquemment dans les mots de la langue Lq. Le répertoire INq contient des infixes, y compris des syllabes et des chaînes de caractère non morphologiques, c'est-à-dire des pseudo infixes, rencontrés fréquemment à l'intérieur de mots dans la langue Lq.

Par exemple, pour la langue française, les trois répertoires précédents PRq, SUq et INq contiennent les morphèmes et autres chaînes de caractère caractéristiques suivants :

PRq = de-, re-, n'-, 1'-, qu'-, d'- ;
SUq = -ais, -aient, -ent, -ée, -ées, -er ;
INq = -ou-, -oi-.

Chaque chaîne de caractère CH inscrite dans l'un des répertoires PRq, SUq et INq dans la base de données 2 est associée à un coefficient respectif CCH qui dépend d'un coefficient PO et optionnellement de deux coefficients FR et LON.

Le coefficient PO dépend de la position de la chaîne de caractère CH qui peut être n'importe où dans un mot de la langue Lq, c'est-à-dire si la chaîne de caractère CH constitue un préfixe ou pseudo préfixe, un suffixe ou pseudo suffixe, ou un infixe ou pseudo infixe. Par exemple pour le français, le coefficient PO est le plus grand pour le répertoire de suffixe SUq et égal à 1,4, est intermédiaire pour le répertoire de préfixe PRq et égal à 1,3, et est le plus petit pour le répertoire d'infixe INq et égal à 0,8.

Le coefficient FR dépend de, par exemple est proportionnel à, la fréquence de la chaîne de caractère CH dans la langue Lq. Par exemple, le coefficient FR est la moyenne d'occurrences de la chaîne de caractère CH dans un texte relativement long de plus de mille mots environ dans la langue déterminée Lq. Par exemple, en français la terminaison "-es" est beaucoup plus fréquente et caractéristique de la langue française que la terminaison "-ions". Par conséquent le coefficient FR pour la terminaison "-es" est plus élevé que le coefficient FR pour la terminaison moins fréquente "-ions". Pour la langue allemande, le coefficient FR est beaucoup plus faible pour chacune des deux terminaisons précédentes.

Le coefficient LON dépend de, par exemple est proportionnel à, la longueur de la chaîne de caractère CH. Par exemple pour un mot de dix caractères, le coefficient LON est égal à 1,3 ou 1,5 lorsque la chaîne de caractère CH contient trois ou cinq caractères.

Le coefficient CCH est typiquement de la forme :

$$CCH = PO(FR + LON).$$

Le quatrième répertoire ATq dans la base de données 3 concerne des caractères et des chaînes de caractère atypiques qui n'appartiennent pas à la langue Lq et qui sont très rarement utilisés dans celle-ci.

Par exemple pour la langue française, le répertoire ATq est composé d'un ensemble de pseudo préfixes atypiques ou improbables, tels que "kr, ge", un ensemble de pseudo infixes atypiques ou improbables tels que "ä, ö, ñ, uu, kk", un ensemble de pseudo suffixes atypiques ou improbables tels que "-ed", et un ensemble de mots atypiques ou improbables.

Chaque chaîne de caractère atypique dans la base de données 3, également désignée par ATq, est associée à un coefficient respectif CAT qui est d'autant plus élevé que la chaîne de caractère atypique est improbable dans la langue Lq.

Le cinquième répertoire MFq dans la base de données 4 contient les mots les plus fréquents de la langue Lq.

Par exemple le répertoire MFq contient pour la langue française les mots suivants : "de, le, la, les, y, à, il, ou, et".

Chaque mot fréquent également désigné par MFq est associé à un coefficient CMF représentatif de, par exemple proportionnel à, la fréquence dans la langue Lq et éventuellement la longueur du mot fréquent MFq. Par exemple, le coefficient CMF est la moyenne d'occurrences du mot fréquent MFq dans un texte relativement long de plus de mille mots environ dans la langue déterminée Lq.

Le dispositif d'identification de langue DI comprend également un comparateur de mot 5, un analyseur de mot 6, deux comparateurs de chaîne de caractère 7 et 8, un accumulateur de coefficient 9 et un comparateur de score 10. Les modules logiques 5 à 9 sont utilisés pour chacune des langues L1 à LQ. Pour une langue déterminée Lq, les modules logiques 5 à 9 ont les fonctions suivantes.

Le comparateur de mot 5 compare chacun des mots extraits du texte TX par l'extracteur 1 aux mots fréquents MFq contenus dans la base de données 4 relatifs à la langue déterminée Lq. L'analyseur 6 analyse chaque mot extrait MT de manière à constituer toutes les chaînes de caractère CH incluses dans le mot extrait MT et ayant des longueurs comprises entre un caractère et le nombre de caractère du mot extrait. Chacune des chaînes de caractère CH constituées par l'analyseur 6 est appliquée aux comparateurs 7 et 8 de manière à les comparer respectivement aux premières chaînes de caractère PRq, SUq et INq contenues dans la base de données 2 pour la langue déterminée Lq et aux deuxièmes chaînes de caractère ATq contenues dans la base de données 3 pour la langue déterminée Lq.

Lorsqu'il y a identité des mots ou des chaînes de caractère dans le comparateur 5, ou 7, 8, celui-ci autorise la lecture du coefficient respectif CMF, ou CCH, CAT dans les bases de données 2, 3, 4 via des portes d'autorisation de lecture ET 51, 71, 81 de manière à appliquer le coefficient lu à l'accumulateur de coefficient 9. Les coefficients CMF et CCH sont additionnés à un score Sq relatif à la langue déterminée Lq et mis initialement à zéro, tandis qu'un coefficient de chaîne de caractère atypique CAT est soustrait au score de langue Sq.

Le comparateur de score 10 compare finalement tous les scores de langue S1 à Sq qui ont été déterminés et mémorisés par l'accumulateur 9 afin de déterminer le plus grand score qui identifie la langue du texte TX.

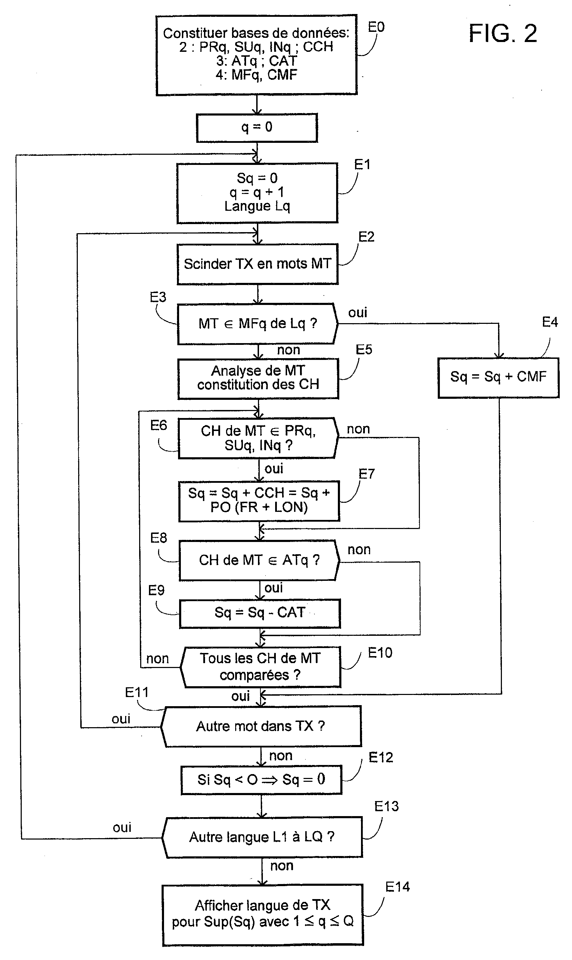

En référence maintenant à la figure 2, préalablement à l'identification automatique de la langue du texte TX saisi dans le ou transmis au dispositif d'identification de langue DI selon l'invention, les cinq répertoires PRq, SUq, INq, ATq et MFq sont constitués dans les bases de données (SGBD) 2, 3 et 4 pour chaque langue déterminée Lq que le dispositif d'identification de langue DI est capable d'identifier, avec $1 \leq q \leq Q$, à une étape initiale E0. Ces répertoires résultent d'une analyse morphologique de la langue Lq.

L'identification de la langue du texte TX composé de mots MT, ou composé simplement d'un seul mot MT, comprend des étapes principales E1 à E14 montrées à la figure 2.

Après avoir mis un indice de langue q à 0, on recherche une identification par rapport à une première langue et plus généralement à une langue déterminée Lq, à la première étape E1. Une variable de score Sq est mise à 0 et l'indice de langue q est augmenté de 1. En fonction des espaces entre les mots, l'extracteur 1 scinde le texte TX à traiter en des mots extraits MT, à l'étape E2.

Pour chaque mot extrait MT du texte TX, les étapes suivantes E3 à E11 sont effectuées.

A l'étape E3, le comparateur de mot 5 interroge le répertoire de mot fréquent MFq de la langue Lq pour y retrouver éventuellement le mot MT. Si le mot MT appartient au répertoire MFq, le comparateur de mot 5 autorise la lecture du coefficient CMF associé au mot MT via la porte 51 afin que l'accumulateur 9 augmente le score Sq du coefficient lu CMF, à l'étape E4. Plus le mot MT est fréquent dans la langue Lq et est éventuellement long, plus le coefficient CMF est élevé. Puis le procédé d'identification passe à l'étape E11.

Si à l'étape E3 le comparateur 5 ne considère pas le mot MT comme un mot fréquent de la langue Lq, le comparateur 5 active l'analyseur de mot 6. L'analyseur 6 analyse le mot extrait MT pour constituer et mémoriser soit des chaînes de caractère CH incluses dans le mot extrait MT telles que définies respectivement dans les répertoires inclus dans les bases de données 2 et 3, soit toutes les chaînes de caractère CH incluses dans le mot extrait MT et ayant des longueurs comprises entre un caractère et le nombre de caractère du mot extrait, à l'étape E5. Selon la dernière variante, les chaînes de caractère CH contenues dans le mot extrait MT et trouvées dans les répertoires PRq, SUq et INq peuvent se recouvrir partiellement, contrairement aux n-grammes selon l'approche du brevet US 6292772 B1 déjà commenté. Par exemple, lorsque le mot traité MT est "aiment" en français, les chaînes de caractère "ment" et "ent" placées dans le répertoire de pseudo suffixes SUq se recouvrent dans le mot traité. Selon un autre exemple, l'infixe "oi" et le pseudo suffixe "is" du mot traité "vois" se recouvrent.

L'analyseur 6 applique ensuite successivement les chaînes de caractère CH constituées pour le mot extrait MT aux comparateurs de chaîne de caractère 7 et 8.

Le comparateur 7 recherche dans les répertoires PRq, SUq et INq de la base de données 2 les premières chaînes de caractère CH qui sont contenues dans le mot MT, à l'étape E6. Pour chaque chaîne de caractère CH dans le mot extrait MT appartenant à l'un des répertoires PRq, SUq et INq, le comparateur de chaîne de caractère 7 autorise la lecture du coefficient CCH = PO(FR + LON) associé à la chaîne de caractère CH via la porte 71 afin que l'accumulateur 9 augmente le score Sq du coefficient lu CCH, à l'étape E7. Les coefficients PO, FR et LON dépendent respectivement de la position de la chaîne de caractère CH dans le mot extrait MT, de la fréquence de la chaîne de caractère CH dans la langue déterminée Lq, et de la longueur de la chaîne de caractère CH.

Que la chaîne de caractère CH dans le mot extrait MT ait été trouvée ou non dans les répertoires PRq, SUq et INq, et parallèlement aux étapes E6 et E7, le comparateur de chaîne de caractère 8 recherche dans le répertoire ATq de la base de données 3 les chaînes de caractère CH qui sont contenues dans le mot MT, à l'étape E8. Pour chaque chaîne de caractère CH dans le mot extrait MT appartenant au répertoire ATq, le comparateur 8 autorise la lecture du coefficient CAT associé à la chaîne de caractère CH via la porte 81 afin que l'accumulateur 9 diminue le score Sq du coefficient lu CAT, à l'étape E9.

Comme indiqué à l'étape E10, les étapes E6 à E9 sont répétées pour chacune des chaînes de caractère CH contenues dans le mot extrait MT. Le score Sq pour la langue déterminée Lq est ainsi augmenté de la somme des coefficients CCH et diminué de la somme des coefficients CAT relatives aux chaînes de caractère CH incluses dans le mot extrait MT et respectivement trouvées dans les répertoires des bases de données 2 et 3, ou augmenté du coefficient CMF si le mot extrait MT a été trouvé dans le répertoire MFq de la base de données 4, après l'étape E10.

Comme indiqué à l'étape E11, si le texte traité TX contient d'autres mots, les étapes E2 à E10 sont exécutées pour chacun des mots extraits du texte TX. Quand tout le texte TX a été traité, si le score Sq pour la langue Lq est négatif à cause de l'application de l'étape E9, le score Sq peut être mis à 0 à l'étape E12. Le score Sq pour la langue Lq est mémorisé dans le dispositif DI qui, à l'étape E13, vérifie que le score d'une autre langue doit être déterminé en exécutant les étapes E1 à E12.

Lorsque les scores S1 à SQ de toutes les langues L1 à LQ ont été déterminés pour le texte traité TX, le comparateur de score 10 compare les Q scores afin de déterminer le plus grand score Sup(Sq) qui identifie la langue du texte TX, à l'étape E14. Puis par exemple un identificateur de la langue du texte ainsi identifiée est transmis par le dispositif DI à un analyseur syntaxique et sémantique de manière à traduire le texte TX en une langue maternelle d'un utilisateur, ou bien à convertir le texte sous forme orale, ou bien encore à utiliser l'identificateur de langue pour indexer le texte en fonction de sa difficulté de compréhension ou générer des trous pour en constituer un exercice à trous pour l'apprentissage de la langue identifiée.

Le cas échéant à l'étape E14, le dispositif DI affiche à l'utilisateur le score de toutes les langues L1 à Lq trié selon l'ordre décroissant. Le nombre de langues Q n'est a priori pas limité.

Si le texte est constitué par un ou plusieurs mots appartenant à deux langues différentes pour lesquelles les coefficients sont respectivement identiques pour les deux langues, les scores pour ces deux langues sont identiques, et non différents selon la technique antérieure.

L'identification de langue selon l'invention est particulièrement performante par rapport à la technique antérieure lorsque le texte est relativement court. Toutefois, en variante, l'identification de langue selon l'invention peut être combinée avec une identification de langue par approche statistique connue, en appliquant l'identification de langue selon l'invention lorsque le texte contient un nombre de caractères ou un nombre de mots inférieur à un seuil prédéterminé, et en appliquant l'identification connue par approche statistique lorsque le nombre de caractères ou de mots dans le texte traité TX est supérieur au seuil prédéterminé.

## Revendications

1. Dispositif identifiant automatiquement la langue d'un texte numérique (TX) et ayant mémorisé des chaînes de caractère numériques pour chacune de plusieurs langues prédéterminées (L1-LQ), comprenant un moyen pour mémoriser préalablement des chaînes de caractères se retrouvant dans des mots de langues prédéterminées, un moyen pour analyser des mots extraits du texte numérique, un moyen pour comparer des chaînes de caractères contenues dans des mots extraits à des chaînes de caractère mémorisées préalablement afin de déterminer des scores associés aux langues prédéterminées et un moyen (10) pour comparer les scores du texte associés aux langues prédéterminées (L1-LQ) afin de déterminer le plus grand des scores qui identifie la langue du texte, **caractérisé en ce que** :

   - le moyen pour mémoriser comprend distinctement un moyen (2) pour mémoriser préalablement des premières chaînes de caractère (PRq, SUq, INq) qui sont fréquentes n'importe où dans des mots respectivement des langues prédéterminées et les caractérisent, et un moyen (3) pour mémoriser préalablement des deuxièmes chaînes de caractère qui sont atypiques (ATq) n'importe où dans des mots respectivement des langues prédéterminées,

- le moyen pour analyser (6) constitue (E5) pour chaque mot extrait (MT) toutes les chaînes de caractère (CH) contenues dans le mot extrait et ayant des longueurs comprises entre un caractère et le nombre de caractère du mot extrait, et
- le moyen pour comparer (7, 8, 9) compare chacune (CH) de toutes les chaînes de caractère contenues dans le mot extrait (MT) aux premières et deuxièmes chaînes de caractère (PRq, SUq, Inq ; ATq) d'une langue déterminée (Lq) afin qu'à chaque fois qu'une première chaîne de caractère est trouvée (E6) dans le mot extrait, un score (Sq) associé à la langue déterminée (Lq) augmente (E7) d'un premier coefficient (CCH) dépendant de la position de la première chaîne de caractère trouvée dans le mot extrait, et à chaque fois qu'une deuxième chaîne de caractère est trouvée dans le mot extrait, le score de langue (Sq) diminue (E9) d'un deuxième coefficient respectif (CAT) qui est associé à la deuxième chaîne de caractère trouvée et qui est d'autant plus élevée que la deuxième chaîne de caractère trouvée est improbable dans la langue déterminée.

2. Dispositif conforme à la revendication 1, dans lequel une première chaîne de caractère est constituée par l'une des chaînes de caractère suivantes dans un mot extrait : un préfixe, un pseudo préfixe, un suffixe, un pseudo suffixe, un infixe, un pseudo infixe.

3. Dispositif conforme à la revendication 1 ou 2, dans lequel le premier coefficient (CCH) d'une première chaîne de caractère (CH) dans le mot extrait (MT) dépend de la fréquence de la chaîne de caractère dans la langue déterminée (Lq).

4. Dispositif conforme à l'une quelconque des revendications 1 à 3, dans lequel le premier coefficient (CCH) d'une première chaîne de caractère (CH) dans le mot extrait (MT) dépend de la longueur de la chaîne de caractère.

5. Dispositif conforme à l'une quelconque des revendications 1 à 4, dans lequel le premier coefficient (CCH) d'une première chaîne de caractère (CH) dans le mot extrait (MT) est déterminé selon la relation suivante :

$$PO \ (FR + LON),$$

dans laquelle PO est un coefficient dépendant de la position de la première chaîne de caractère dans le mot extrait, FR est un coefficient dépendant de la fréquence de la première chaîne de caractère dans la langue déterminée (Lq), et LON est un coefficient dépendant de la longueur de la première chaîne de caractère.

6. Dispositif conforme à l'une quelconque des revendications 1 à 5, **caractérisé en ce qu'**il comprend un moyen de comparaison (5, 9) pour comparer chacun des mots extraits (MT) du texte (TX) avec des mots (MFq) fréquents dans la langue déterminée (Lq) et initialement répertoriés dans un moyen de mémoire (4) afin qu'à chaque fois qu'un mot fréquent est trouvé dans le texte, le score (Sq) de la langue déterminée (Lq) n'augmente que d'un coefficient (CMF) dépendant de la fréquence du mot extrait dans la langue déterminée et/ou de la longueur du mot fréquent.

FIG. 1

TX
↓

Extracteur de MT dans TX et mémorisation — 1

MT

Comparateur de mot — 5

4 — MFq CMF

51

Analyseur de MT et constitution de CH — 6

CH

Comparateur de chaîne de caractère — 7

2 — PRq, SUq, INq CCH

71

Comparateur de chaîne de caractère — 8

3 — ATq CAT

81

Accumulateur de coefficient
Sq = Sq + CMF + CCH - CAT
Mémorisation Sq — 9

Comparateur de score — 10

↓

Affichage langue pour Sup(Lq)

DI

FIG. 2

```
          ┌─────────────────────────────┐
          │ Constituer bases de données:│  E0
          │   2 : PRq, SUq, INq ; CCH   │
          │        3: ATq ; CAT         │
          │         4: MFq, CMF         │
          └─────────────────────────────┘
                        │
                  ┌───────────┐
                  │   q = 0   │
                  └───────────┘
                        │
              ┌───────────────────┐
              │      Sq = 0       │  E1
              │    q = q + 1      │
              │    Langue Lq      │
              └───────────────────┘
                        │
            ┌───────────────────────┐
            │ Scinder TX en mots MT │  E2
            └───────────────────────┘
                        │
  E3      ┌───────────────────────┐     oui        ┌──────────────────┐
          │   MT ∈ MFq de Lq ?    ├──────────────  │      Sq = Sq + CMF│  E4
          └───────────────────────┘                └──────────────────┘
                    │ non          E5
          ┌───────────────────────┐
          │    Analyse de MT      │
          │  constitution des CH  │
          └───────────────────────┘
                        │
  E6      ┌───────────────────────┐     non
          │   CH de MT ∈ PRq,     ├──────────┐
          │     SUq, INq ?        │          │
          └───────────────────────┘          │
                    │ oui                     │
          ┌───────────────────────┐  E7       │
          │  Sq = Sq + CCH = Sq + │           │
          │     PO (FR + LON)     │           │
          └───────────────────────┘           │
  E8      ┌───────────────────────┐     non   │
          │    CH de MT ∈ ATq ?   ├────────┐  │
          └───────────────────────┘        │  │
                    │ oui                   │  │
  E9      ┌───────────────────────┐         │  │
          │     Sq = Sq - CAT     │         │  │
          └───────────────────────┘         │  │
   non    ┌───────────────────────┐  E10     │  │
  ────────┤   Tous les CH de MT   │◄────────┘  │
          │     comparées ?       │◄────────────┘
          └───────────────────────┘
                    │ oui
  E11     ┌───────────────────────┐
  oui ────┤   Autre mot dans TX ? │
          └───────────────────────┘
                    │ non          E12
          ┌───────────────────────┐
          │  Si Sq < O ⟹ Sq = 0   │
          └───────────────────────┘
                        │
  oui     ┌───────────────────────┐  E13
  ────────┤  Autre langue L1 à LQ ?│
          └───────────────────────┘
                    │ non
          ┌───────────────────────┐  E14
          │  Afficher langue de TX│
          │ pour Sup(Sq) avec 1 ≤ q ≤ Q │
          └───────────────────────┘
```

**Office européen**

**des brevets**

## RAPPORT DE RECHERCHE EUROPEENNE

Numéro de la demande

EP 03 29 3114

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 415 250 B1 (VAN DEN AKKER DAVID) 2 juillet 2002 (2002-07-02) * abrégé; figure 3 * * colonne 8, ligne 37 - colonne 9, ligne 3; figure 2C * * colonne 10, ligne 14 - colonne 11, ligne 2 * * colonne 15, ligne 4-36 * * colonne 20, ligne 4-44 * --- | 1-5 | G06F17/27 G06F17/28 |
| A,D | US 6 292 772 B1 (KANTROWITZ MARK) 18 septembre 2001 (2001-09-18) * colonne 1, ligne 1 - colonne 2, ligne 47 * --- | 1-6 | |
| A | US 6 023 670 A (PAULSEN JR ROBERT CHARLES ET AL) 8 février 2000 (2000-02-08) * colonne 2, ligne 32-63 * ----- | 6 | |
| | | | **DOMAINES TECHNIQUES RECHERCHES (Int.Cl.7)** G06F |

Le présent rapport a été établi pour toutes les revendications

| Lieu de la recherche | Date d'achèvement de la recherche | Examinateur |
|---|---|---|
| BERLIN | 9 février 2004 | Woods, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**           EP 03 29 3114

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-2004

| Document brevet cité au rapport de recherche | | Date de publication | Membre(s) de la famille de brevet(s) | | Date de publication |
|---|---|---|---|---|---|
| US 6415250 | B1 | 02-07-2002 | AUCUN | | |
| US 6292772 | B1 | 18-09-2001 | AU | 1623200 A | 19-06-2000 |
| | | | WO | 0033295 A1 | 08-06-2000 |
| US 6023670 | A | 08-02-2000 | EP | 0849688 A2 | 24-06-1998 |
| | | | US | 6009382 A | 28-12-1999 |
| | | | US | 6216102 B1 | 10-04-2001 |
| | | | US | 5913185 A | 15-06-1999 |

Pour tout renseignement concernant cette annexe : voir Journal Officiel de l'Office européen des brevets, No.12/82